# EUROPEAN PATENT APPLICATION

(11) **EP 4 838 353 A1**
(43) Date of publication of application: **11.11.2026**
(21) Application number: 25220036.5
(22) Date of filing: 02.12.2025
(51) Int. Cl.: G06F 8/65, H02M 1/32

(54) **UPGRADING POWER CONVERTER WITH ITS COMMUNICATION MODULE AND CONTROLLER USING EITHER A DELAYED OR AN IMMEDIATE UPGRADE PROCEDURE**

(30) Priority: 07.05.2025 CN 202510585019
(71) Applicant: Sungrow Power Supply Co., Ltd., Hefei, Anhui 230088 (CN)
(72) Inventor: ZHU, Ke, Hefei, Anhui, 230088 (CN); ZHOU, Yizhen, Hefei, Anhui, 230088 (CN)
(74) Representative: Biallo, Dario

(57) **Abstract**

A control method and apparatus for upgrading a power converter are provided according to the present disclosure, which relate to the technical field of power conversion systems. In the present disclosure, upgrade information and operation information of the power converter are acquired, and the power converter is upgraded based on the upgrade information only when the operation information of the power converter meets an upgrade execution condition corresponding to the upgrade information. When the operation information of the power converter fails to meet the upgrade execution condition, the power converter is not upgraded, avoiding affecting the normal grid-connected power generation of the power converter

## Description

### FIELD

The present disclosure relates to the technical field of power conversion systems, and in particular to a control method and control apparatus for upgrading a power converter, a communication module, a controller and a power converter.

### BACKGROUND

A power conversion system is provided with a power converter. For example, the power converter is implemented by an inverter. The inverter is required to support software upgrade, to facilitate software upgrade in scenarios such as grid-connected standard update, new function iteration, and software logic optimization.

The inverter undertakes an important task of power generation in the power conversion system. During a software upgrade process, how to prevent the software upgrade operation from affecting the normal grid-connected power generation of the inverter is a technical issue to be addressed by those skilled in the art.

### SUMMARY

In view of this, a control method and control apparatus for upgrading a power converter, a communication module, a controller and a power converter are provided according to the present disclosure, to prevent a software upgrade operation from affecting the normal grid-connected power generation of the power converter.

The following technical solutions are provided according to the present disclosure.

According to a first aspect of the present disclosure, a control method for upgrading a power converter is provided. The control method includes:
acquiring upgrade information and operation information of the power converter; and
upgrading, in response to the operation information of the power converter meeting an upgrade execution condition corresponding to the upgrade information, the power converter based on the upgrade information.

In an embodiment, the upgrade information includes a delay upgrade command and an upgrade data packet, and the upgrade execution condition corresponding to the upgrade information includes a delay upgrade permission being enabled and the power converter being on standby.

The upgrading, in response to the operation information of the power converter meeting an upgrade execution condition corresponding to the upgrade information, the power converter based on the upgrade information includes upgrading, upon determining that the delay upgrade permission is enabled and the power converter is on standby, the power converter by using the upgrade data packet in response to the delay upgrade command.

In an embodiment, the power converter being on standby includes the power converter being disconnected from a power grid, and an input power of the power converter being greater than a minimum operating power.

In an embodiment, the power converter being disconnected from the power grid includes: the input power of the power converter being less than a minimum grid-connected power threshold; or, disconnecting, in response to the input power of the power converter being greater than or equal to the minimum grid-connected power threshold, the power converter from the power grid in response to an off-grid instruction.

In an embodiment, the control method further includes enabling the delay upgrade permission in response to the delay upgrade command.

In an embodiment, the upgrade information includes an immediate upgrade command and an upgrade data packet, and the upgrade execution condition corresponding to the upgrade information includes a delay upgrade permission being disabled and the power converter being in a grid-connected operating state or on standby.

The upgrading, in response to the operation information of the power converter meeting an upgrade execution condition corresponding to the upgrade information, the power converter based on the upgrade information includes: upgrading, upon determining that the delay upgrade permission is disabled and the power converter is in the grid-connected operating state or on standby, the power converter by using the upgrade data packet in response to the immediate upgrade command.

In an embodiment, after the upgrading the power converter by using the upgrade data packet, the control method further includes: enabling, in response to a number of times of consecutive failed upgrades being greater than a threshold, the delay upgrade permission; and upgrading, upon determining that the delay upgrade permission is enabled and the power converter is on standby, the power converter by using the upgrade data packet.

In an embodiment, the upgrading the power converter by using the upgrade data packet includes upgrading at least one of a communication module and a controller in the power converter by using the upgrade data packet.

In an embodiment, after the acquiring upgrade information of the power converter, the control method further includes: outputting upgrade failure information upon determining that a part of the upgrade data packet is lost and the part of the upgrade data packet fails to be replenished; or, outputting upgrade failure information upon determining that upgrade packet verification fails.

According to a second aspect of the present disclosure, a control apparatus for upgrading a power converter is provided. The control apparatus for upgrading a power converter includes an information acquisition module and an upgrade module. The information acquisition module is configured to acquire upgrade information and operation information of the power converter. The upgrade module is configured to upgrade, in response to the operation information of the power converter meeting an upgrade execution condition corresponding to the upgrade information, the power converter based on the upgrade information.

According to a third aspect of the present disclosure, a communication module is provided. The communication module includes at least one processor and a memory connected to the at least one processor. The memory is configured to store a computer program. The at least one processor is configured to execute the computer program, to cause the communication module to perform the control method for upgrading a power converter described above.

According to a fourth aspect of the present disclosure, a controller is provided. The controller includes at least one processor and a memory connected to the at least one processor. The memory is configured to store a computer program. The at least one processor is configured to execute the computer program, to cause the controller to perform the control method for upgrading a power converter described above.

According to a fifth aspect of the present disclosure, a power converter is provided. The power converter includes at least one of the communication module described above and the controller described above.

A control method and control apparatus for upgrading a power converter, a communication module, a controller and a power converter are provided according to the present disclosure. In the present disclosure, upgrade information and operation information of the power converter are acquired, and the power converter is upgraded based on the upgrade information when the operation information of the power converter meets an upgrade execution condition corresponding to the upgrade information. When the operation information of the power converter fails to meet the upgrade execution condition, the power converter is not upgraded, avoiding affecting the normal grid-connected power generation of the power converter.

### BRIEF DESCRIPTION OF THE DRAWINGS

To describe the technical solutions in the embodiments of the present disclosure or in the related technology more clearly, the drawings describing the embodiments or related technology are briefly introduced hereinafter. Apparently, the drawings in the following description are only embodiments of the present disclosure, and other drawings can also be obtained based on the provided drawings by those skilled in the art without any creative work.
FIG. 1 is a flowchart of a control method for upgrading a power converter according to an embodiment of the present disclosure;
FIG. 2 is a schematic diagram of upgrading an inverter according to an embodiment of the present disclosure;
FIG. 3 is a schematic diagram of upgrading an inverter according to another embodiment of the present disclosure;
FIG. 4 is a schematic structural diagram of a control apparatus for upgrading a power converter according to an embodiment of the present disclosure; and
FIG. 5 is a schematic structural diagram of a power converter according to an embodiment of the present disclosure.

### DETAILED DESCRIPTION

The technical solutions in the embodiments of the present disclosure are described clearly and completely hereinafter in conjunction with the drawings in the present disclosure. Apparently, the described embodiments are only a part rather than all of the embodiments of the present disclosure. Any other embodiments obtained by those skilled in the art based on the embodiments of the present disclosure without any creative work fall within the protection scope of the present disclosure.

In actual scenarios, various devices are configured in different systems, and at least one device has an upgrade requirement. The following description is made with an example that the system is a power conversion system, the device is a power converter, and the power converter is implemented by an inverter.

In the power conversion system, the inverter is required to support software upgrade, to facilitate software upgrade in scenarios such as grid-connected standard update, new function iteration, and software logic optimization.

The inverter undertakes an important task of power generation in the power conversion system. During practical operation of the inverter, at night, only a communication module in the inverter is powered while a controller in the inverter is unpowered in order to reduce nighttime power consumption of the inverter. As a result, the controller of the inverter fails to be upgraded during the night, and thus the controller is upgraded only during daytime.

During the daytime, the inverter performs grid-connected power generation. In an upgrade process of the inverter, the inverter is shut down to disconnect the inverter from the power grid first, and then the inverter is upgraded, to ensure the safety of the power conversion system. The shutdown of the inverter may affect the normal operation of the inverter, thus affecting the power generation capacity of the inverter during the normal grid-connected power generation, resulting in a decrease in the power generation capacity of the power conversion system.

In a system including multiple inverters, the inverters may be upgraded alternately, in order to avoid power generation loss during the upgrade process of the inverter. However, according to this solution, the power generation capacity of the inverter may be affected. This solution is suitable for neither a single-inverter scenario nor for photovoltaic arrays or power stations operating at full power.

Another solution is to provide a power supply circuit at an alternating-current side of the inverter. When the inverter is to be upgraded at night, the controller is powered by the power supply circuit at the alternating-current side, resulting in an increase in the hardware cost.

In summary, a control method for upgrading a power converter is required, and the control method can not only avoid affecting the power generation capacity during normal grid-connected operation of the inverter, but also avoid additional hardware cost. For this purpose, in an embodiment of the present disclosure, upgrade information and operation information of the power converter are acquired, and the upgrade information corresponds to an upgrade execution condition. When there is no need to upgrade immediately, the upgrade execution condition may include a delay upgrade permission being enabled and the power converter being on standby, that is, an upgrade operation is performed on the power converter that is on standby and does not generate power. Since the power converter does not perform grid-connected power generation, the power generation capacity of the power converter is not affected. In addition, the entire process is implemented by means of software, avoiding the additional hardware cost.

According to an embodiment of the present disclosure, a control method for upgrading a power converter is provided, in which an execution subject is an electronic device. The electronic device may be a rectifier for converting alternating-current power into direct-current power, an inverter for converting direct-current power into alternating-current power, or a device capable of transmitting electric energy generated by photovoltaic power generation to the power grid, such as a bidirectional DC-AC converter. In an embodiment, the electronic device may include a communication module and a controller, and the control method for upgrading a power converter may be applied to the communication module or the controller.

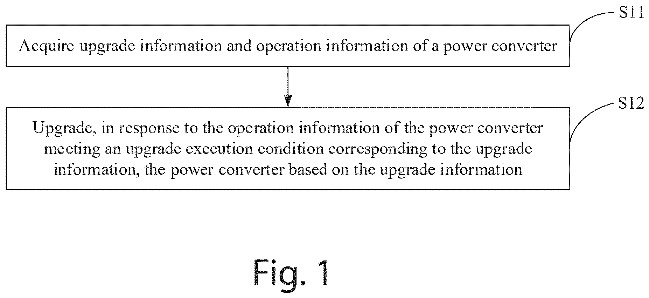

Referring to FIG. 1, the control method for upgrading the power converter may include steps S11 and S12.

In step S11, upgrade information and operation information of the power converter are acquired.

In this embodiment, the power converter may be a rectifier for converting alternating-current power into direct-current power, an inverter for converting direct-current power into alternating-current power, or a bidirectional DC-AC converter as described above.

The upgrade information of the power converter refers to data for controlling the upgrade process of the power converter, and may include an upgrade command, an upgrade data packet, or the like. The upgrade command refers to a command for controlling the upgrade process of the power converter. The upgrade data packet refers to data for upgrading the power converter.

In an embodiment, the upgrade information of the power converter may be issued by a control device, and the control device in this embodiment may be a device for performing upgrade control, such as a host, a master controller, or a cloud.

The power converter includes a communication module and a controller. The communication module communicates with the control device, and a communication manner between them is determined based on actual situations. The communication module may receive upgrade information issued by the control device, and is upgraded based on the upgrade information. In addition, the communication module may send the upgrade information to the controller, such that the controller is upgraded based on the upgrade information.

In an embodiment, before acquiring the upgrade information of the power converter, an upgrade command issued by the control device is acquired.

In this embodiment, the upgrade command includes at least two types of upgrade commands, i.e., a delay upgrade command and an immediate upgrade command.

When an abnormality affecting operation of the power converter occurs, the power converter is upgraded immediately for repairing the abnormality as soon as possible if the abnormality can be repaired through software upgrade. In this case, the power generation capacity of the power converter is not taken into account, and the upgrade command issued by the control device is the immediate upgrade command. After receiving the immediate upgrade command, the power converter may be upgraded immediately on receiving the upgrade data packet, to repair the abnormality as soon as possible, thus avoiding affecting the normal operation of the power converter. The normal operation of the power converter refers to the normal grid-connected power generation of the power converter.

When no abnormality that requires the power converter to be upgraded immediately occurs, the power converter may be upgraded without affecting the power generation capacity of the power converter. In this case, the upgrade command issued by the control device is a delay upgrade command. When receiving the delay upgrade command, the power converter may be not upgraded immediately. Instead, the power converter may be upgraded only when the power converter is on standby and does not perform grid-connected power generation, preventing the upgrade of the power converter from affecting the power generation capacity of the power converter during the grid-connected power generation.

For the power converter, the power converter is configured with a delay upgrade permission in order to adapt to different upgrade commands issued by the control device. The delay upgrade permission should be disabled if immediate upgrade is required, and the delay upgrade permission should be enabled if delay upgrade is required.

In an embodiment, the delay upgrade permission may be configured by a delay upgrade state. The delay upgrade state may be denoted by a specific numerical value, letter, character, or the like. Clearing the delay upgrade state indicates that the delay upgrade permission is disabled, and setting the delay upgrade state indicates that the delay upgrade permission is enabled.

After acquiring the upgrade command issued by the control device, the delay upgrade permission of the power converter may be disabled, to prevent the enablement of the delay upgrade permission in the previous upgrade process from causing a time error in the current upgrade. If subsequent upgrade is delay upgrade, the delay upgrade permission is enabled again.

After disabling the delay upgrade permission, the power converter may send information to the control device, which indicates a successful handshake between the control device and the power converter. Subsequently, the control device may issue an upgrade data packet to the power converter. The content of the upgrade data packet is configured according to actual situations. The upgrade data packet is used for an upgrade operation on some functions of the power converter. The power converter may receive the upgrade data packet issued by the control device.

In an embodiment, on receiving the upgrade data packet, the power converter may check whether the content of the upgrade data packet is complete, accurate, and the like.

In an embodiment, after the handshake between the power converter and the control device is successful, the control device may transmit the upgrade data packet to the power converter. After receiving the upgrade data packet, the power converter may perform packet loss detection and upgrade packet verification. The packet loss detection is used to detect whether the content of the upgrade data packet is complete. The upgrade packet verification is used to verify whether the content of the upgrade data packet is accurate. In an embodiment, the upgrade package verification may be performed by using CRC (Cyclic Redundancy Check) verification.

During the packet loss detection, if it is determined that the upgrade data packet is not complete, the power converter may send information to the control device, such that the control device may re-send a lost part of the upgrade data packet. If a part of the upgrade data packet fails to be sent to the power converter after multiple times of re-sending, the power converter determines that a part of the upgrade data packet is lost and the part of the data packet fails to be replenished. In this case, the power converter outputs upgrade failure information to the control device, and an upgrade process ends. Otherwise, the upgrade process is continued.

Similarly, during the upgrade packet verification, it is determined that the content of the upgrade data packet issued by the control device is inaccurate if the upgrade packet verification fails. In this case, the power converter outputs upgrade failure information to the control device, and the upgrade process ends. Otherwise, the upgrade process is continued.

In addition to the upgrade information described above, the operation information of the power converter is also acquired.

In this embodiment, the operation information of the power converter may include a solar intensity, a power, a grid-connected operating state, a state of a delay upgrade permission, or the like.

In step S12, in response to the operation information of the power converter meeting an upgrade execution condition corresponding to the upgrade information, the power converter is upgraded based on the upgrade information.

In this embodiment, the upgrade execution condition corresponding to the upgrade information is configured based on actual situations. The upgrade execution condition varies due to different upgrade commands in the upgrade information. In this embodiment, the configuration of the upgrade execution condition is to ensure that a current operating status of the power converter can meet a minimum requirement for upgrade, such that the power converter can be successfully upgraded. The minimum requirement for upgrade may include a solar intensity, a power, a grid-connected operating state, a state of the delay upgrade permission, or the like.

When the operation information of the power converter meets the upgrade execution condition corresponding to the upgrade information, it is indicated that the power converter can be upgraded currently, and the power converter may be upgraded based on the upgrade information.

In an embodiment, the power converter includes a communication module and a controller. During upgrading the power converter, at least one of the communication module and the controller in the power converter is upgraded by using the upgrade data packet.

During the upgrade process, the communication module decomposes the upgrade data packet, and is upgraded by itself using communication module upgrade data in the upgrade data packet. In the self-upgrade process (before the self-upgrade, during the self-upgrade, or after the self-upgrade), the communication module sends controller upgrade data in the upgrade data packet to the controller, and the controller is upgraded by using the controller upgrade data.

It should be noted that if only the communication module is to be upgraded, only the communication module is upgraded by itself using the communication module upgrade data in the upgrade data packet. If only the controller is to be upgraded, only the controller is upgraded by itself using the controller upgrade data in the upgrade data packet.

During the upgrade process of the controller, the controller may return an upgrade status (upgrading, upgrade failure, or upgrade success) to the communication module, and the communication module returns the upgrade status to the control device, such that the control device can monitor the upgrade progress of the power converter.

After at least one of the controller and the communication module is successfully upgraded, the delay upgrade permission may be disabled, to prevent the enablement of the delay upgrade permission from affecting a next upgrade operation.

In this embodiment, upgrade information and operation information of the power converter are acquired, and the power converter is upgraded based on the upgrade information only when the operation information of the power converter meets an upgrade execution condition corresponding to the upgrade information. When the operation information of the power converter fails to meet the upgrade execution condition, the power converter is not upgraded, avoiding affecting the normal grid-connected power generation of the power converter.

Based on any of the above embodiments, when the upgrade information includes a delay upgrade command, the delay upgrade permission may be enabled in response to the delay upgrade command.

In the above embodiment, after acquiring the upgrade command issued by the control device, the power converter may disable the delay upgrade permission, to prevent the enablement of the delay upgrade permission in the previous upgrade process from causing a time error in the current upgrade. However, in this embodiment, since the upgrade command is the delay upgrade command and a delay upgrade operation is to be performed, such that the delay upgrade permission is enabled to ensure that a current state of the delay upgrade permission matches the delay upgrade operation.

Based on any of the above embodiments, when the upgrade information includes a delay upgrade command and an upgrade data packet, the upgrade execution condition corresponding to the upgrade information is a condition where the power converter is on standby and the delay upgrade operation is to be performed. In an embodiment, the upgrade execution condition corresponding to the upgrade information includes a delay upgrade permission being enabled and the power converter being on standby.

The enablement of the delay upgrade permission is to ensure that the delay upgrade operation is performed.

The power converter being on standby refers to a condition where the power converter does not perform grid-connected power generation and the communication module and the controller in the power converter are operating normally.

In an embodiment, the power converter being on standby includes the power converter being disconnected from the power grid and an input power of the power converter being greater than a minimum operating power.

The power converter being disconnected from the power grid means that the power converter does not perform grid-connected power generation. The power converter failing to perform grid-connected power generation is resulted from a low solar intensity, faults, manual control on the power converter to be disconnected from the power grid, or other factors.

In an embodiment, the power converter being disconnected from the power grid includes: the input power of the power converter being less than a minimum grid-connected power threshold.

In an actual scenario, when the input power of the power converter is less than the minimum grid-connected power threshold, and the power converter is disconnected from the power grid, the power converter does not output electric energy to the power grid. In such case, the upgrade operation on the power converter may not affect the power generation capacity of the power converter during the normal grid-connected power generation.

In different scenarios, there are various reasons for the input power of the power converter being less than the minimum grid-connected power threshold. For example, the power converter is employed in a photovoltaic power generation scenario, an input end of the power converter is connected to a photovoltaic module, and the photovoltaic module generates power with solar energy. The low solar intensity may result in the photovoltaic module outputting less power to the power converter, such that the input power of the power converter is less than the minimum grid-connection power threshold.

A period of low solar intensity typically refers to periods of insufficient sunlight, such as a period shortly after sunrise or before sunset, or a period of cloudy days and other bad weather conditions. During such period, the solar intensity is low, the photovoltaic module generates less power, and the generated power may fail to meet a grid-connected condition for the power converter. During this period, since the power converter does not perform grid-connected power generation operation, upgrade of the power converter may not affect the power generation capacity of the power converter during the normal grid-connected power generation.

In another embodiment, the power converter is employed in a wind power generation scenario, the input power of the power converter is small due to a low wind intensity, and thus generated power may fail to meet the grid-connected condition for the power converter. During such period, since the power converter does not perform grid-connected power generation operation, upgrade of the power converter may not affect the power generation capacity of the power converter during the normal grid-connected power generation.

In addition to the fact that the power converter being disconnected from the power grid includes: the input power of the power converter being less than a minimum grid-connected power threshold, in another embodiment, the power converter being disconnected from the power grid includes disconnecting, in response to the input power of the power converter being greater than or equal to the minimum grid-connected power threshold, the power converter from the power grid in response to an off-grid instruction.

In a specific implementation, when the input power of the power converter is greater than or equal to the minimum grid-connected power threshold, the input power of the power converter meets a grid-connected power generation condition, and the power converter may perform grid-connected power generation operation. When the grid-connected power generation capacity exceeds a required power or a fault occurs in the power converter, an off-grid instruction may be outputted manually, and the power converter may be disconnected from the power grid in response to the off-grid instruction. During the off-grid period, the power converter is upgraded.

In an embodiment, after the power converter is disconnected from the power grid, during the upgrade operation, if a grid-connected instruction is received, the power converter may be connected to the power grid after being successfully upgraded, to prevent the grid-connected operation from affecting the operating state of the power grid in the upgrade process.

In addition to the power converter being disconnected from the power grid, the power converter being on standby includes the input power of the power converter being greater than the minimum operating power.

In an embodiment, under a condition that the input power of the power converter is greater than the minimum operating power, the minimum operating power may be determined based on the actual situation, and the minimum operating power can ensure the normal operation of the controller in the power converter. For example, the power converter is an inverter, the minimum operating power may be set as a value greater than 5% of a rated power of the inverter. When the input power of the inverter is greater than the minimum operating power, the input power can meet an upgrade requirement for the controller, such that sufficient power can be supplied to the controller for upgrade, ensuring the normal upgrade of the controller.

In an embodiment, the upgrade execution condition corresponding to the upgrade information includes a delay upgrade permission being enabled and the power converter being on standby.

In this case, the upgrading, in response to the operation information of the power converter meeting an upgrade execution condition corresponding to the upgrade information, the power converter based on the upgrade information includes: upgrading, upon determining that the delay upgrade permission is enabled and the power converter is on standby, the power converter by using the upgrade data packet in response to a delay upgrade command.

In an embodiment, when a delay upgrade operation is to be performed, operation information of the power converter may be acquired, and whether the delay upgrade permission is enabled and the power converter is on standby may be determined based on the operation information. If the delay upgrade permission is enabled and the power converter is on standby, the power converter may be upgraded by using the upgrade data packet.

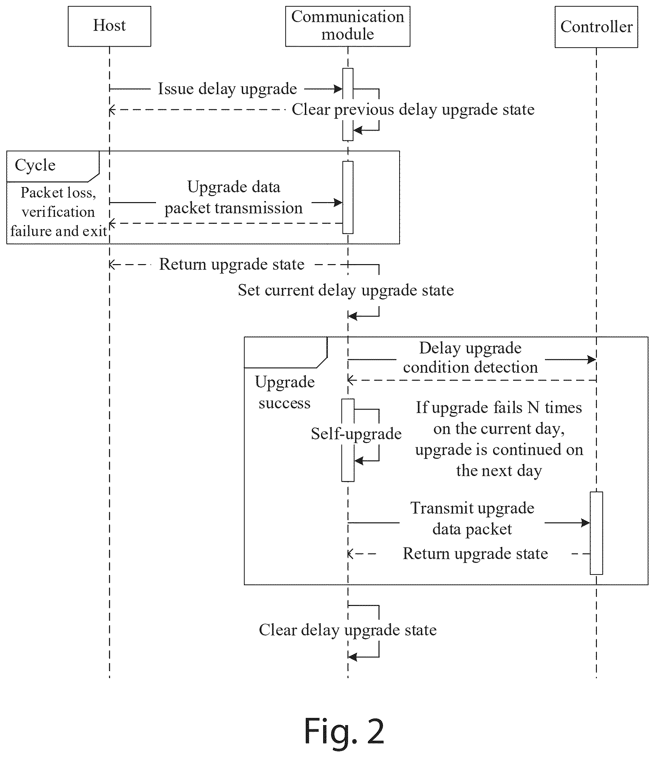

In an embodiment, a delay upgrade operation may be shown in FIG. 2. In the embodiment, on the premise of ensuring that the software upgrade on the power converter does not affect the power generation capacity of the power converter, the delay upgrade operation is started. The power converter is upgraded when the solar intensity is low at sunrise on the next day, the input power of the power converter meets the upgrade requirement (that is, the input power of the power converter is greater than the minimum operating power), and the power converter is disconnected from the power grid.

As shown in FIG. 2, an entire upgrade process is introduced with an example that the control device is a host and the power converter is an inverter. Detailed descriptions are as follows.

During upgrading the inverter, the host may issue a delay upgrade command to the inverter. On receiving the delay upgrade command, the inverter may clear the previous delay upgrade state. In FIG. 2, description is made with an example that the communication module in the inverter modifies a delay upgrade state. At night, only the communication module in the inverter is powered while the controller is unpowered, the controller does not operate at night. If the delay upgrade command is received at night, the controller fails to modify the delay upgrade state. Thus, in FIG. 2, description is made with an example that the communication module in the inverter clears the previous delay upgrade state. During the daytime, the delay upgrade state may be modified by the communication module or the controller.

After the handshake between the host and the inverter is successful, the host may transmit an upgrade data packet to the communication module in the inverter. On receiving the upgrade data packet, the communication module in the inverter may perform packet loss detection and upgrade packet verification. At night, the packet loss detection may be performed by the communication module. At daytime, the packet loss detection may be performed by the communication module or the controller.

If packet loss occurs and packet replenishment fails, or the upgrade packet verification fails, upgrade failure information is sent to the host, and the inverter exits from the upgrade process. Otherwise, the delay upgrade state may be set, and an upgrade status is returned to the host. The upgrade status may be delay upgrade such that the host exits from the upgrade process.

The controller or the communication module in the inverter periodically detects whether a delay upgrade condition is met (FIG. 2 shows that the communication module acquires data from the controller and periodically detects whether the upgrade execution condition corresponding to the upgrade information is met, and this embodiment is introduced with an example that the upgrade execution condition is the delay upgrade condition). In this embodiment, the delay upgrade condition may include the delay upgrade permission being enabled and the power converter being on standby.

The power converter being on standby includes the power converter being disconnected from the power grid, and an input power of the power converter being greater than a minimum operating power.

The power converter being disconnected from the power grid includes the input power of the power converter being less than a minimum grid-connected power threshold; or disconnecting, in response to the input power of the power converter being greater than or equal to the minimum grid-connected power threshold, the power converter from the power grid in response to an off-grid instruction.

If the delay upgrade condition fails to be met, detection is continued.

If the delay upgrade condition is met, an upgrade process is started. Firstly, the communication module is upgraded. After a self-upgrade process of the communication module, the communication module sends controller upgrade data in the upgrade data packet to the controller, and the controller is upgraded and returns an upgrade status to the communication module.

If both the controller and the communication module are successfully upgraded, the communication module clears the delay upgrade state and exits from the upgrade process. If the upgrade fails, upgrade is continued until the upgrade is successful, and a total number of times of upgrade is less than or equal to N times, where N represents a positive integer. If the upgrade is successful, the communication module clears the delay upgrade state and exits from the upgrade process. Otherwise, the communication module may set the delay upgrade state, and exit from the upgrade process. A delay upgrade detection is continued on the next day.

In an embodiment, one of the communication module and the controller is upgraded.

In an embodiment, the upgrade data packet is sent to the communication module by the host during daytime or nighttime. After the successful upgrade packet verification on the upgrade data packet by the communication module, the communication module temporarily stores the upgrade data packet without starting an upgrade process. On the next day, when the inverter is restarted and is disconnected from the power grid, and the input power of the power converter meets the upgrade requirement (that is, the input power of the power converter is greater than the minimum operating power), the upgrade process is started again. Since the solar intensity is low at sunrise and the inverter is disconnected from the power grid, the upgrade process does not result in power generation loss.

In this embodiment, in a case that delay upgrade on the power converter is allowed, the inverter is upgraded when the power converter is on standby and does not perform grid-connected power generation, preventing the upgrade of the power converter from affecting the power generation capacity.

In addition, in an embodiment of the present disclosure, since the power converter is upgraded in an off-grid state, the upgrade of the power converter does not affect the power grid. Thus, in the embodiment of the present disclosure, the power converter may be directly upgraded without being shut down first.

Based on the above embodiment, in another embodiment of the present disclosure, the upgrade information includes an immediate upgrade command and an upgrade data packet, and the upgrade execution condition corresponding to the upgrade information includes a delay upgrade permission being disabled and the power converter being in a grid-connected operating state or on standby.

In this embodiment, when the power converter is to be upgraded immediately, there is no requirement on the operating state of the power converter. The power converter may be may be in the grid-connected operating state, where the power converter is connected to the power grid and outputs power to the power grid. Alternatively, the power converter may be on standby. Here, the meaning of standby can be referred to the above description.

Regardless of whether the power converter is in the grid-connected operating state or on standby, the input power of the power converter at this time is sufficient to provide the controller in the power converter with enough electricity energy to support the upgrade of the controller. In addition to meeting the requirement of the operating state, the delay upgrade permission is required to be disabled. Under these conditions, at least one of the communication module and the controller is upgraded by using the upgrade data packet, to meet the immediate upgrade requirement.

In an embodiment, the upgrade information includes the immediate upgrade command and the upgrade data packet, and the upgrade execution condition corresponding to the upgrade information includes a delay upgrade permission being disabled and the power converter being in a grid-connected operating state or on standby.

In this case, in response to the operation information of the power converter meeting the upgrade execution condition corresponding to the upgrade information, upgrading the power converter based on the upgrade information includes upgrading, upon determining that the delay upgrade permission is disabled and the power converter is in the grid-connected operating state or on standby, the power converter by using the upgrade data packet in response to the immediate upgrade command.

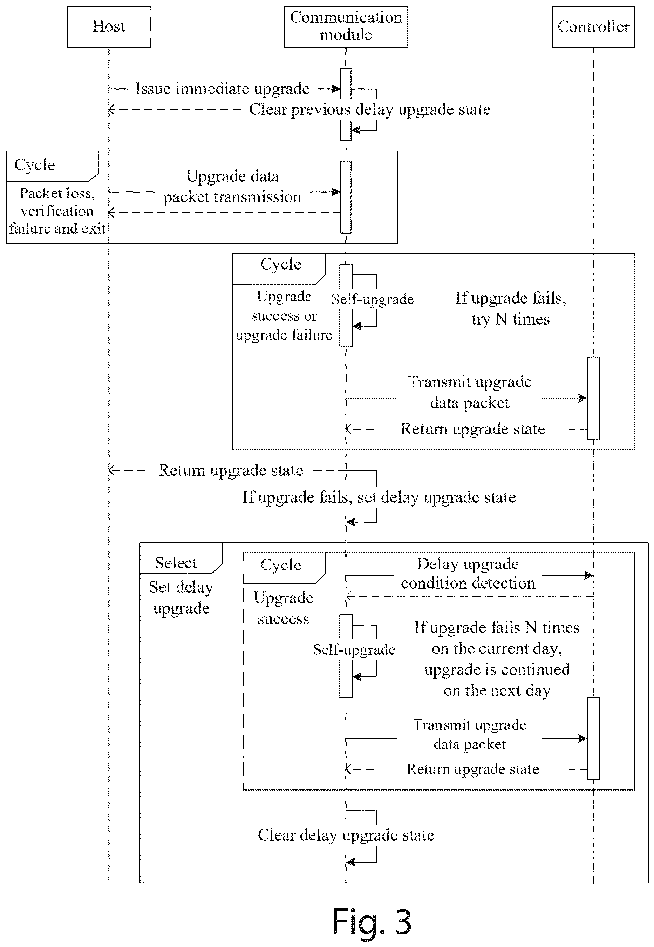

In an embodiment, if the power converter is required to be rapidly upgraded to resolve some issues, the impact of the upgrade of the power converter on the power generation capacity is not taken into account. A timing diagram is shown in FIG. 3. The entire upgrade process is introduced with an example that the control device is the host and the power converter is the inverter. Detailed descriptions are as follows.

When the inverter is upgraded, the host may issue an immediate upgrade command to the inverter. On receiving the immediate upgrade command, the inverter may clear the delay upgrade state.

After the handshake between the host and the inverter is successful, the host may transmit an upgrade data packet to the inverter. On receiving the upgrade data packet, the inverter may perform packet loss detection and upgrade packet verification. If packet loss occurs and packet replenishment fails, or the upgrade packet verification fails, upgrade failure information is returned to the host, and the upgrade process ends. Otherwise, the upgrade process is continued.

During upgrading the inverter, the communication module is first upgraded, and then the controller is upgraded. If both the communication module and the controller are successfully upgraded, upgrade success information is returned to the host and the upgrade process ends.

It should be noted that when the inverter is in the grid-connected operating state, that is, when the inverter performs the grid-connected power generation, and if an immediate upgrade is required, the inverter is disconnected from the power grid first and then is upgraded. Alternatively, if the inverter detects that itself is to be upgraded during the grid-connected power generation, the inverter may be automatically disconnected from the power grid, and then is upgraded.

In an embodiment, the inverter may fails to be upgraded. If the upgrade fails, upgrade is continued until the upgrade is successful, and a total number of times of upgrade is less than or equal to N times, where N represents a positive integer. If the upgrade is successful, upgrade success information is returned to the host and the upgrade process ends. If the number of times of consecutive failed upgrades is greater than a threshold, such as N times, it indicates that the immediate upgrade is unsuccessful. In this case, the immediate upgrade operation is stopped and a delay upgrade permission is enabled in order to avoid repeated upgrade failures. In an embodiment, a delay upgrade state may be set, upgrade failure information is returned, and the upgrade process ends, to wait for a subsequent upgrade operation.

It should be noted that if the inverter receives an immediate upgrade command issued by the host at night, the controller fails to be upgraded due to being shut down, and a delay upgrade state is set. The controller is updated when being powered on the next day.

The delay upgrade operation may be performed by using an upgrade data packet if it is determined that the delay upgrade permission is enabled and the power converter is on standby.

For the explanation that the delay upgrade permission is enabled and the power converter is on standby, reference may be made to the above description.

In an embodiment, the inverter periodically detects whether a delay upgrade condition is met, that is, whether the delay upgrade permission is enabled and the power converter is on standby. If the delay upgrade condition is not met, the detection is continued.

If the delay upgrade condition is met, an upgrade process is started. Firstly, the communication module is upgraded under the control of the controller. After the self-upgrade process of the communication module, the communication module sends controller upgrade data in the upgrade data packet to the controller, and the controller is upgraded and returns an upgrade status to the communication module.

If both the controller and the communication module are successfully upgraded, the communication module clears the delay upgrade state and exits from the upgrade process. If the upgrade fails, upgrade is continued until the upgrade is successful, and a total number of times of upgrade is less than or equal to N times, where N represents a positive integer. If the upgrade is successful, the communication module clears the delay upgrade state and exits from the upgrade process. Otherwise, the communication module may set the delay upgrade state, and exit from the upgrade process. A delay upgrade detection is continued on the next day.

In this embodiment, when the power converter is to be upgraded immediately, the power converter is upgraded immediately, to ensure reliable operation of the power converter. If the upgrade fails, a delay upgrade operation is performed, preventing the upgrade of the power converter from affecting the power generation capacity.

In summary, with the control method for upgrading a power converter in the embodiment of the present disclosure, an upgrade strategy can be optimized only through software adjustment without hardware modification, which is similar as nighttime upgrade function, reducing the power generation loss caused by the upgrade of the power converter, and specifically reducing the power generation loss caused by the upgrade to nearly 0W. In addition, the control method for upgrading a power converter in the embodiment of the present disclosure is widely applicable. When the normal upgrade on the inverter fails, a delay upgrade strategy is activated, ensuring the consistency of software version of the power converter.

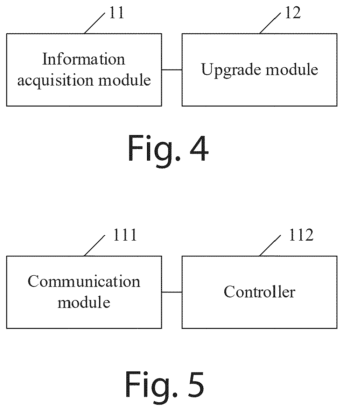

Based on the control method for upgrading a power converter according to the above embodiment, a control apparatus for upgrading a power converter is provided according to another embodiment of the present disclosure. Referring to FIG. 4, the control apparatus for upgrading a power converter may include an information acquisition module 11 and an upgrade module 12.

The information acquisition module 11 is configured to acquire upgrade information and operation information of the power converter.

The upgrade module 12 is configured to upgrade, in response to the operation information of the power converter meeting an upgrade execution condition corresponding to the upgrade information, the power converter based on the upgrade information.

In an embodiment, the upgrade information includes a delay upgrade command and an upgrade data packet, and the upgrade execution condition corresponding to the upgrade information includes a delay upgrade permission being enabled and the power converter being on standby. The upgrade module 12 is further configured to upgrade, upon determining that the delay upgrade permission is enabled and the power converter is on standby, the power converter by using the upgrade data packet in response to the delay upgrade command.

In an embodiment, the power converter being on standby includes the power converter being disconnected from a power grid and an input power of the power converter being greater than a minimum operating power.

In an embodiment, the power converter being disconnected from the power grid includes the input power of the power converter being less than a minimum grid-connected power threshold; or disconnecting, in response to the input power of the power converter being greater than or equal to the minimum grid-connected power threshold, the power converter from the power grid in response to an off-grid instruction.

In an embodiment, the control apparatus further includes a permission processing module. The permission processing module is configured to enable the delay upgrade permission in response to the delay upgrade command.

In an embodiment, the upgrade information includes an immediate upgrade command and an upgrade data packet, and the upgrade execution condition corresponding to the upgrade information includes a delay upgrade permission being disabled and the power converter being in a grid-connected operating state or on standby. The upgrade module 12 is further configured to upgrade, upon determining that the delay upgrade permission is disabled and the power converter is in the grid-connected operating state or on standby, the power converter by using the upgrade data packet in response to the immediate upgrade command.

In an embodiment, the permission processing module is further configured to enable, in response to a number of times of consecutive failed upgrades being greater than a threshold, the delay upgrade permission.

The upgrade module 12 is further configured to upgrade, upon determining that the delay upgrade permission is enabled and the power converter is on standby, the power converter by using the upgrade data packet.

In an embodiment, for upgrading the power converter by using the upgrade data packet, the upgrade module 12 is further configured to upgrade at least one of a communication module and a controller in the power converter by using the upgrade data packet.

In an embodiment, the control apparatus further includes an information feedback module. The information feedback module is configured to output upgrade failure information upon determining that a part of the upgrade data packet is lost and the part of the upgrade data packet fails to be replenished; or, output upgrade failure information upon determining that upgrade packet verification fails.

In this embodiment, upgrade information and operation information of the power converter are acquired, and the power converter is upgraded based on the upgrade information only when the operation information of the power converter meets an upgrade execution condition corresponding to the upgrade information. When the operation information of the power converter fails to meet the upgrade execution condition, the power converter is not upgraded, avoiding affecting the normal grid-connected power generation of the power converter.

It should be noted that, the operation processes of the modules, and the sub-modules in the embodiments may be referred to corresponding descriptions in the above embodiments, and are not repeated herein.

According to another embodiment of the present disclosure, a communication module is provided. The communication module includes at least one processor and a memory connected to the at least one processor.

The memory is configured to store a computer program.

The processor is configured to execute the computer program, to cause the communication module to perform the control method for upgrading a power converter described above.

According to another embodiment of the present disclosure, a controller is provided. The controller includes at least one processor and a memory connected to the at least one processor.

The memory is configured to store a computer program.

The processor is configured to execute the computer program, to cause the controller to perform the control method for upgrading a power converter described above.

It should be noted that the controller in the embodiment refers to a controller in the power converter.

According to an embodiment of the present disclosure, a power converter is provided. The power converter includes at least one of the communication module described above and the controller described above.

Referring to FIG. 5, a power converter is provided according to an embodiment of the present disclosure.

The power converter includes a communication module 111 and a controller 112.

Both the communication module 111 and the controller 112 can implement the control method for upgrading a power converter described above, and thus the upgrade control is performed on the power converter by the communication module 111 or the controller 112 as needed.

It should be noted that, the specific implementation processes of the communication module 111 and the controller 112 in this embodiment may be referred to corresponding descriptions in the above embodiments. Further, the power converter may include only one of the communication module 111 and the controller 112.

According to an embodiment of the present disclosure, a computer program product is further provided. The computer program product carries a computer-readable instruction. The computer-readable instruction, when executed on an electronic device, causes the electronic device to perform the control method for upgrading a power converter according to any one of the embodiments of the present disclosure.

According to an embodiment of the present disclosure, a computer-readable storage medium is further provided. The storage medium carries one or more computer programs. The one or more computer programs, when executed on an electronic device, enable the electronic device to perform the control method for upgrading a power converter according to any one of the embodiments of the present disclosure.

The disclosed embodiments are described above, so that those skilled in the art can implement or use the embodiments of the present disclosure. Various modifications to these embodiments are apparent to those skilled in the art. The general principles defined herein may be implemented in other embodiments without departing from the spirit or scope of the present disclosure. Therefore, the present disclosure is not limited to the embodiments illustrated herein, but should comply with the widest scope consistent with the principles and novel features disclosed herein.

## Claims

1. A control method for upgrading a power converter, **characterized by** comprising:
acquiring (S11) upgrade information and operation information of the power converter; and
upgrading (S12), in response to the operation information of the power converter meeting an upgrade execution condition corresponding to the upgrade information, the power converter based on the upgrade information.

2. The control method for upgrading a power converter according to claim 1, wherein the upgrade information comprises a delay upgrade command and an upgrade data packet, and the upgrade execution condition corresponding to the upgrade information comprises a delay upgrade permission being enabled and the power converter being on standby,
wherein the upgrading, in response to the operation information of the power converter meeting an upgrade execution condition corresponding to the upgrade information, the power converter based on the upgrade information comprises:
upgrading, upon determining that the delay upgrade permission is enabled and the power converter is on standby, the power converter by using the upgrade data packet in response to the delay upgrade command.

3. The control method for upgrading a power converter according to claim 2, wherein the power converter being on standby comprises:
the power converter being disconnected from a power grid; and
an input power of the power converter being greater than a minimum operating power.

4. The control method for upgrading a power converter according to claim 3, wherein the power converter being disconnected from the power grid comprises:
the input power of the power converter being less than a minimum grid-connected power threshold; or
disconnecting, in response to the input power of the power converter being greater than or equal to the minimum grid-connected power threshold, the power converter from the power grid in response to an off-grid instruction.

5. The control method for upgrading a power converter according to claim 2, further comprising:
enabling the delay upgrade permission in response to the delay upgrade command.

6. The control method for upgrading a power converter according to claim 1, wherein the upgrade information comprises an immediate upgrade command and an upgrade data packet, and the upgrade execution condition corresponding to the upgrade information comprises a delay upgrade permission being disabled and the power converter being in a grid-connected operating state or on standby,
wherein the upgrading, in response to the operation information of the power converter meeting an upgrade execution condition corresponding to the upgrade information, the power converter based on the upgrade information comprises:
upgrading, upon determining that the delay upgrade permission is disabled and the power converter is in the grid-connected operating state or on standby, the power converter by using the upgrade data packet in response to the immediate upgrade command.

7. The control method for upgrading a power converter according to claim 6, wherein after the upgrading the power converter by using the upgrade data packet, the control method further comprises:
enabling, in response to a number of times of consecutive failed upgrades being greater than a threshold, the delay upgrade permission; and
upgrading, upon determining that the delay upgrade permission is enabled and the power converter is on standby, the power converter by using the upgrade data packet.

8. The control method for upgrading a power converter according to any one of claims 2 to 7, wherein the upgrading the power converter by using the upgrade data packet comprises:
upgrading at least one of a communication module and a controller in the power converter by using the upgrade data packet.

9. The control method for upgrading a power converter according to any one of claims 2 to 7, wherein after the acquiring upgrade information of the power converter, the control method further comprises:
outputting upgrade failure information upon determining that a part of the upgrade data packet is lost and the part of the upgrade data packet fails to be replenished; or
outputting upgrade failure information upon determining that upgrade packet verification fails.

10. A control apparatus for upgrading a power converter, **characterized by** comprising:
an information acquisition module (11), configured to acquire upgrade information and operation information of the power converter; and
an upgrade module (12), configured to upgrade, in response to the operation information of the power converter meeting an upgrade execution condition corresponding to the upgrade information, the power converter based on the upgrade information.

11. The control apparatus according to claim 10, wherein the upgrade information comprises a delay upgrade command and an upgrade data packet, and the upgrade execution condition corresponding to the upgrade information comprises a delay upgrade permission being enabled and the power converter being on standby, the upgrade module (12) is further configured to:
upgrade, upon determining that the delay upgrade permission is enabled and the power converter is on standby, the power converter by using the upgrade data packet in response to the delay upgrade command.

12. The control apparatus according to claim 11, wherein the power converter being on standby comprises:
the power converter being disconnected from a power grid; and
an input power of the power converter being greater than a minimum operating power.

13. A communication module, **characterized by** comprising at least one processor and a memory connected to the at least one processor, wherein
the memory is configured to store a computer program; and
the at least one processor is configured to execute the computer program, to cause the communication module to perform the control method for upgrading a power converter according to any one of claims 1 to 9.

14. A controller, **characterized by** comprising at least one processor and a memory connected to the at least one processor, wherein
the memory is configured to store a computer program; and
the at least one processor is configured to execute the computer program, to cause the controller to perform the control method for upgrading a power converter according to any one of claims 1 to 9.

15. A power converter, **characterized by** comprising at least one of the communication module (111) according to claim 13 and the controller (112) according to claim 14.
